Europäisches Patentamt

European Patent Office

Office européen des brevets

(11) Veröffentlichungsnummer: **0 467 232 A2**

## EUROPÄISCHE PATENTANMELDUNG

(21) Anmeldenummer: **91111648.1**

(22) Anmeldetag: **12.07.91**

(51) Int. Cl.5: **B25B 15/00**, B25B 13/06, F16B 23/00

(30) Priorität: **14.07.90 DE 9010606 U**

(43) Veröffentlichungstag der Anmeldung:
**22.01.92 Patentblatt 92/04**

(84) Benannte Vertragsstaaten:
**AT BE CH DE DK ES FR GB GR IT LI LU NL SE**

(71) Anmelder: **WERA WERK HERMANN WERNER GMBH & CO.**
**Korzerter Strasse 21-25**
**W-5600 Wuppertal(DE)**

(72) Erfinder: **Taubert, Hubert**
**Wingertsbergstrasse 3**
**W-5450 Neuwied(DE)**

(74) Vertreter: **Rieder, Hans-Joachim, Dr. et al**
**Rieder & Partner Corneliusstrasse 45**
**Postfach 11 04 51**
**W-5600 Wuppertal 11(DE)**

(54) **Schraubendreher/Schraube.**

(57) Die Erfindung betrifft einen Schraubendreher mit einem Schaft (11), an dessen einem Ende (11a) ein Einsteckabschnitt (12) vorgesehen ist mit auf der Außenfläche (18) verlaufenden, gleichmäßig am Umfang verteilten, ineinander übergehenden Erhöhungen (19) und Vertiefungen (20) zum Einstecken in eine Aufnahmeöffnung (16) einer Schraube (14). Um ein problemloses Einstecken des Einsteckabschnittes in die Aufnahmeöffnung der zweiten Welle zu ermöglichen, wobei in Einsteckstellung - auch in abgewinkelter Lage - noch stets ein genügend großer Kraftfluß verbleiben soll, schlägt die Erfindung vor, daß der Einsteckabschnitt (12) mit einer kalotten- oder kegelstumpfförmigen Führungsspitze (13, 113) versehen ist, die auf der Außenfläche (25) verlaufende, gleichmäßig am Umfang verteilte, ineinander übergehende Erhöhungen (26) und Vertiefungen (27) aufweist.

FIG. 1

Die Erfindung betrifft einen Schraubendreher gemäß Gattungsbegriff des Hauptanspruches.

Es sind bereits Gelenkverbindungen bekannt, die aus einem ersten Treib-Element am Ende einer ersten drehbaren Welle und einem zweiten Treib-Element am Ende einer zweiten drehbaren Welle bestehen, welche Treib-Elemente verschwenkbar miteinander in Eingriff stehen derart, daß die Achsen der Wellen gegeneinander bis zu einem bestimmten Winkel schwenkbar sind. Derartige Gelenkverbindungen werden als Kardangelenk bezeichnet.

Es ist auch bereits eine Gelenkverbindung vorgeschlagen, die aus einem ersten Treib-Element am Ende einer ersten drehbaren Welle und einem zweiten Treib-Element am Ende einer zweiten drehbaren Welle besteht, wobei die Treib-Elemente verschwenkbar miteinander im Eingriff stehen, und zwar so, daß die Achsen der Wellen gegeneinander bis zu einem bestimmten Winkel schwenkbar sind. Hierzu weist das erste Treib-Element etwa die Form eines Hohlzylinders auf, an dessen Innenfläche parallel zur Achse verlaufende, gleichmäßig am Umfang verteilte, abwechselnd konvexe und konkave, ineinander übergehende Vertiefungen und Erhöhungen ausgebildet sind. Das zweite Treib-Element ist etwa kugelförmig ausgebildet und weist an seiner Oberfläche abwechselnd Vertiefungen und Erhöhungen auf, die in Längsrichtung entsprechend einer die Achse der zweiten Welle enthaltenen Ebene verlaufen und die in Umfangsrichtung, insbesondere in der Äquatorialebene des kugelförmigen zweiten Treib-Elementes einen zur Innenfläche des erster Treib-Elementes etwa komplementären Verlauf aufweisen. Insbesondere ist dabei vorgesehen, daß die Übergänge zwischen den Vertiefungen und den Erhöhungen stetig verlaufen, daß auf dem kugelförmigen zweiten Treib-Element die Vertiefungen im Vergleich zu den Erhöhungen des ersten Treib-Elementes wenigstens zum Teil breiter bzw. die Erhöhungen gegenüber den Vertiefungen auf dem ersten Treib-Element wenigstens zum Teil schmäler ausgebildet sind, daß auf dem kugelförmigen Treib-Element die Vertiefungen und die Erhöhungen in der Äquatorzone in ihrer Breite den zugeordneten Erhöhungen bzw. Vertiefungen des ersten Treib-Elementes etwa entsprechen und mit zunehmender Entfernung von der Äquatorebene die Vertiefungen breiter oder gleich breit und die Erhöhungen schmäler sind und daß der Mittelpunkt des Innenkreises, der mit dem Minimum der konkaven Vertiefung tangiert, je nach Halbkugel um einen bestimmten Betrag unterhalb bzw. oberhalb des Kugelmittelpunktes gestellt ist. Die Treibelemente weisen dabei je sechs Vertiefungen zwischen sechs Erhöhungen auf und es ist vorgesehen, daß die Mittelebene (Symmetrieebene) jeder Vertiefung bzw. Erhöhung die Drehachse des betreffenden Treib-Elementes enthält. Diese Gelenkverbindung ist so ausgebildet, daß sie auch als Schraube und Schraubendreher Verwendung finden kann (EP-A-0 235 183).

Es hat sich jedoch gezeigt, daß teilweise unter bestimmten Umständen Probleme entstehen, wenn der Einsteckabschnitt sozusagen als lobulares Treib-Element in die Aufnahmeöffnung einer Schraube eingeführt werden soll, damit dann beide Treib-Elemente miteinander in Eingriff stehen. Durch die komplementäre Ausgestaltung der beiden Teile ergibt es sich leicht bei einer ganz bestimmten Drehwinkelstellung zueinander - auch ohne daß eine Winkel-Verschwenkung zueinander vorliegt -, daß ein Einführen nicht möglich ist, da die jeweiligen Erhöhungen aufeinandertreffen und somit eine Einführung verhindert wird. Oft muß das Einführen auch blindlings erfolgen.

Andererseits darf eine etwaige Einführhilfe den Formschluß-Eingriffsquerschnitt - auch in gewinkelten Stellungen - nicht zu sehr beeinträchtigen.

Es ist daher Aufgabe der vorliegenden Erfindung, einen Schraubendreher so zu schaffen, daß ein problemloses Einstecken des Einsteckabschnittes in die Aufnahmeöffnung der zweiten Welle möglich wird, andererseits in Einsteckstellung - auch in abgewinkelter Lage - noch stets ein genügend großer Kraftfluß verbleibt.

Diese Aufgabe wird gelöst durch Anspruch 1. Die Unteransprüche stellen vorteilhafte Weiterbildungen dar.

Hierbei ist also eine bestimmte Führungsspitze für das Ende des Schaftes vorgesehen, die zur Einführungshilfe in die Schraube dient und zwar derart, daß die Achsen der Wellen miteinander eine axiale Drehbewegung durchführen können, wobei auch ein hohes Drehmoment übertragbar ist und eine leichte dreiaxiale Verschwenkbarkeit möglich und gegeben ist.

Die Führungsspitze kann etwa halbkugel- oder kegelstumpfförmig ausgebildet sein, wobei es sich hierbei nur um eine Grundform handelt, da auch eine Dreiviertelkugel, eine Viertelkugel oder ein kleinerer Kugelteil oder ein kurzer Kegelstumpf in Betracht kommt und insbesondere der Spitzenbereich abgeflacht ausgebildet sein kann. An der Oberfläche der Führungsspitze sind abwechselnd Vertiefungen und Erhöhungen angeordnet, die in Längsrichtung entsprechend einer Ebene verlaufen, wobei die Schrauben-Aufnahmeöffnung die Form eines lobularen Hohlzylinders aufweist und an der Innenfläche parallel zur Achse verlaufende, gleichmäßig am Umfang verteilte, abwechselnd konvexe und konkave, ineinander übergehende

Vertiefungen und Erhöhungen aufweist, die in Umfangsrichtung einen zur Schaftoberfläche etwa komplementären Verlauf aufweisen.

Die lobularen Teile der Halbkugel oder des Kegelstumpfes der Führungsspitze sind vom Äquator zum Pol zugespitzt, so daß sich die Halbkugel oder der Kegelstumpf leicht in den lobularen Hohlzylinder der Schraube in Eingriff bringen läßt.

Gemäß einer bevorzugten Ausführungsform ist vorgesehen, daß bei der Führungsspitze

a) die Übergänge zwischen den Erhöhungen und den Vertiefungen stetig verlaufen,

b) die Erhöhungen und die Vertiefungen des Einsteckabschnittes der Welle und die Erhöhungen und Vertiefungen der Führungsspitze bis zur Äquatorzone oder lobularen Stange in ihrer Breite gleichbleiben und daß die Erhöhungen auf der Führungsspitze mit zunehmender Entfernung von der Äquatorzone oder lobularen Stange zur Spitze (Pol) schmäler werden.

Hierdurch ist u. a. eine leichte dreidimensionale Verschwenkbarkeit gegeben.

Gemäß einer weiteren bevorzugten Ausführungsform ist vorgesehen, daß der Mittelpunkt des Innenkreises, der mit dem Minimum der konkaven Vertiefungen tangiert, mit dem Mittelpunkt des Außenkreises der Führungsspitze gleich ist oder um einen bestimmten Betrag gegenüber dem Mittelpunkt oberhalb des Äquators in den Einsteckabschnitt gestellt ist oder die Mittelpunkte des Innen- und des Außenkreises gemeinsam um einen bestimmten Betrag gegenüber dem Mittelpunkt oberhalb des Äquators in den Einsteckabschnitt gestellt sind.

Vorzugsweise besitzt der Endabschnitt je sechs Vertiefungen (2, 3, 4, 5-lobul möglich) zwischen sechs Erhöhungen, wobei vorgesehen sein kann, daß die Mittelebene jeder Vertiefung bzw. Erhöhung die Drehachse enthält.

Die Übergänge zwischen den Vertiefungen und Erhöhungen verlaufen stetig, so daß sie abgerundet ineinander übergehen und scharfe Kanten vermieden werden. So wird erreicht, daß die Kraft über Flächen (lobulare Flanken) übertragen wird. Die Vertiefungen auf dem Endabschnitt mit der halbkugel- oder kegelstumpfförmigen Spitze sind im Vergleich zu den Erhöhungen wenigstens zum Teil gleich breit oder breiter bzw. die Erhöhungen sind gegenüber den Vertiefungen aus dem ersten Treib-Element zur Spitze bzw. zum Pol hin schmäler ausgebildet. Dadurch wird erreicht, daß das erforderliche Spiel vorhanden ist, damit beim Einführen des Endes mit der Führungsspitze kein Klemmen bzw. Fräsen bei Rotation auftritt und ein leichtes Einführen auch unter Rotation gewährleistet ist (auch wenn die lobularen Erhöhungen und Vertiefungen nicht in Längsrichtung einer Achse liegen). Das macht solche Schraubendreher - z. B. als Schraubendreher-Einsätze - erst für Maschinenschrauber - einsatzfähig. Auch bei Toleranz-Schwierigkeiten der in einer Achse zueinander stehenden Schraube mit den Treib-Elementen und bei axialer Zuführung unter nicht eingehaltener axialer Toleranz führt die halbkugel- oder kegelstumpfförmige lobulare Spitze (Führungsspitze) sich leicht in die Schraube unter Ausgleich der Toleranzen ein.

Hierbei ist es möglich, daß in der Einführphase die beiden Wellen zueinander in einem desaxialen Zustand bzw. geringen dreidimensionalen Schwenkwinkel geführt sind.

Der desaxiale Zustand der beiden Wellen kann gegebenenfalls nach Einführung (Zusammenführung) in axiale Längsrichtung gebracht werden, weil die Eingangs-Halbkugel- oder Kegelstumpfführungsspitze mit dem dreidimensionalen Schwenkwinkel in der Einführphase diese zueinanderführt. Dies ergibt sich beim Halbkugel-Treib-Element einerseits aus den kleiner werdenden Flankenwinkeln ausgehend von den Maxima der konvexen Erhöhungen zur Spitze bzw. der gleichbleibenden oder größer werdenden Flankenwinkel der Minima der konkaven Vertiefung und ihrer Wendepunkte von der Äquatorebene zur Polkappe oder Kegelstumpfspitze hin und andererseits beim Hohl-Treib-Element durch die gleichbleibenden Flankenwinkel, die sich aus dem Maxima der kovexen Erhöhung und dem Minima der konkaven Vertiefung und deren Wendepunkte ergeben. Die Geometrie der Schrauben-Aufnahmeöffnung ist mit der Äquatorebene der Halbkugel-Geometrie oder der lobularen Stange des ersten Treib-Elementes kongruent.

Der Umkreis im Maximum der konvexen Erhöhung und der Innenkreis im Minimum der konkaven Vertiefung sind bei den Treib-Elementen "TORX" mit A und B definiert. Der konvexe Radius ist mit $F_{Rad}$ und der konkave Radius mit $E_{Rad}$ gegeben. Bei TORX ist $F_{Rad} < E_{Rad}$. Die Mittelpunkte dieser Radien bilden Wendepunkte, in denen die konvexen und konkaven Flankenwinkel zum Maximum der konvexen Erhöhung und zum Minimum der konkaven Vertiefung führen.

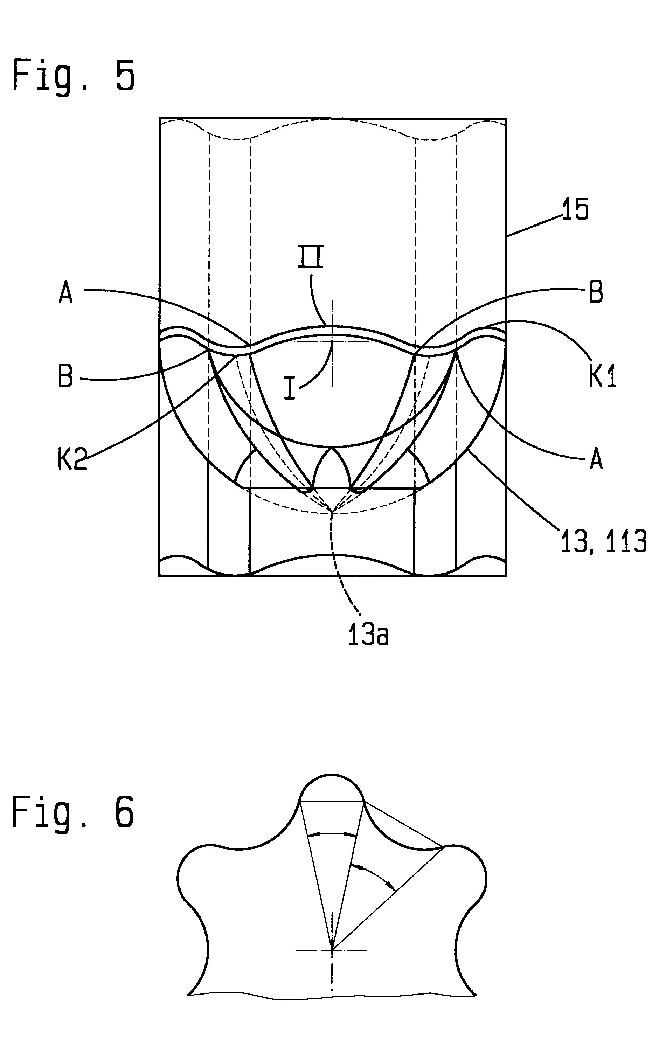

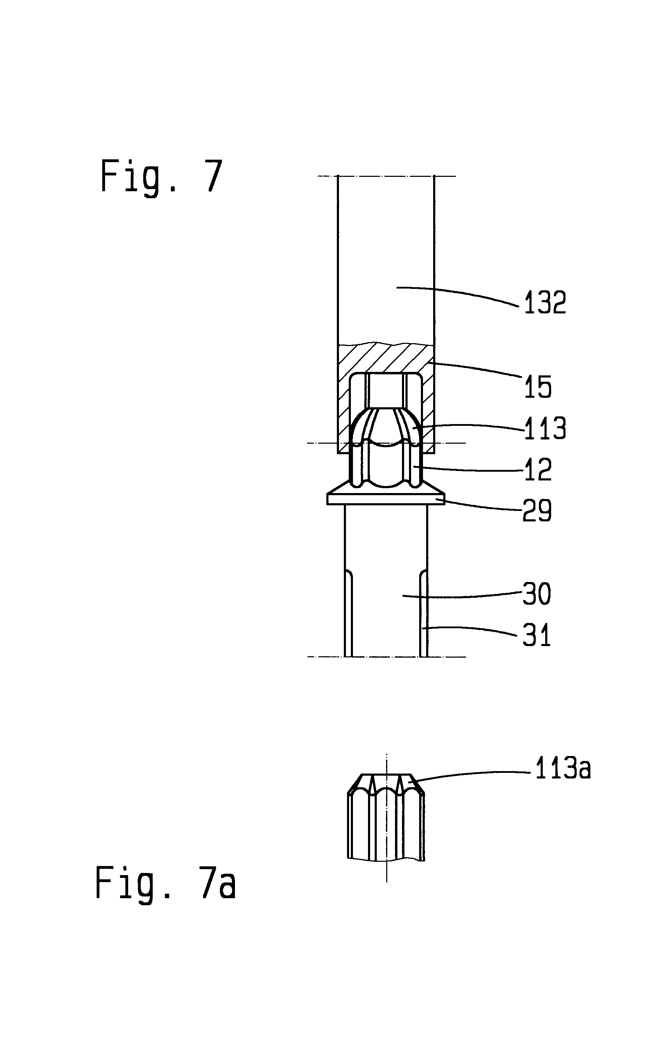

Ausgehend von der Äquatorebene des mit der halbkugel- oder kegelstumpfförmigen Spitze versehenen Endabschnittes zum Pol der Halbkugel oder Kegelstumpfspitze werden die Erhöhungen schmäler bzw. die konvexen Flankenwinkel kleiner (Fig. 5 und 6).

Aus fertigungstechnischen Gründen wird das halbkugelförmige Treib-Element nicht bis zum Pol ausgeprägt. Die Halbkugel-Pol-Spitze entfällt, so daß eine Halbkugelschicht verbleibt.

Um die halbkugelförmige Führungsspitze zu verkürzen, damit die beiden Teile, die miteinander in Eingriff stehen, einen höchstmöglichen Schluß bilden, um eine optimale mitnehmende axiale Drehbewegung vorzunehmen, wird der Mittelpunkt des Innenkreises der Halbkugel, der mit dem Minimum der konkaven Vertiefung tangiert oder die Mittelpunkte des Innen- und des Außenkreises um einen bestimmten Betrag außerhalb, d. h. oberhalb des Kugelmittelpunktes gestellt. Der Halbkreis bzw. die Halbkugel um diesen Mittelpunkt geschlagen mit dem gleichen Radius des Innenkreises, erhält somit eine größere Differenz zwischen dem Halbkreis bzw. Halbkugel-Außendurchmesser und der kleineren Halbkugel bzw. Halbkugelinnendurchmesser, die sich aus dem neuen Innenkreis im Miminum der konkaven Vertiefung mit dem um den bestimmten Betrag oberhalb des Halbkugelmittelpunktes des äußeren Kreises ergibt. Hierdurch verändern auch die Wendepunkte der konvexen und konkaven Radien ihre Lage in das Innere der Halbkugel. Somit werden die Winkel vom Maximum der konvexen Erhöhung bzw. vom Minimum der konkaven Vertiefung zu den Wendepunkten kleiner. Das Spiel dieser geschaffenen Antriebs-Halbkugel gegenüber dem Hohlzylinder mit der komplementären Geometrie in der Äquatorebene des halbkugelförmigen Endabschnittes ergibt einen dreidimensionalen Winkel des Antriebs-Elementes, der beim Schwenken erzielt wird. Dies entspricht dem Spiel, das erforderlich ist, damit beim Zusammenfügen ein leichtes Einführen gewährleistet ist, sowohl unter axialer Rotation eines Teiles oder beider Teile, als auch unter desaxialer Zuführung und Eingriff der beiden lobularen Treib-Elemente.

Zur Erzielung einer axialen Klemmung werden die lobularen Erhöhungen auf der Außenfläche des Einsteckabschnittes unter einen Winkel Alpha von $1°$-$6°$, vornehmlich $2,5°$-$3,5°$ gestellt und beide in ihren Kreis-Maßen erhöht. Hierdurch wird erreicht, daß nach der optimalen Einführung die Teile zueinander axial geklemmt werden können und auch in horizontaler Ebene gehalten und verschraubt werden können. Hierdurch ist sichergestellt, daß nach dem aufgrund der Führungsspitze relativ leichten Einführen des Einsteckabschnittes in die Aufnahmeöffnung bei weiterem Einführen ein gewisser Klemmeffekt auftritt, da der sich verbreiternde Einsteckabschnitt in die zylindrische Aufnahmeöffnung hineingeleitet und dort festgeklemmt wird. Die Schraube kann so fest auf den Schraubendreher aufgesteckt werden. Für den Anwender bietet dies nämlich die Möglichkeit, die mit einem TORX-Kopf versehenen Schrauben beispielsweise auf die Schraubendreherspitze einer Einschraubmaschine aufzustecken und diese Maschine dann mit beiden Händen beim Einschrauben zu halten. Der Arbeitsablauf wird dabei wesentlich beschleunigt.

Im Hinblick auf alle voranstehend angesprochenen Ausführungsformen ist festzustellen, daß die Funktionsweise unabhängig davon gegeben ist, ob der Einsteckabschnitt ein Schraubendreher oder auch ein Teil einer Schraube selbst ist. Es ist nämlich möglich, daß der Einsteckabschnitt den Antriebsteil auf dem Kopf einer Schraube bildet, auf den ein hohlzylinderisch ausgebildetes Kopfstück eines Schraubendrehers aufgesteckt wird. In diesem Fall ist dann der Schraubenkopf mit der erfindungsgemäßen Führungsspitze versehen. Die neuartige Führungsspitze kann daher sowohl als Führungsspitze zur Einführung einer Welle in eine Wellenverbindung, zur Einführung eines Schraubendrehers in einen Schraubenkopf oder zum erleichterten Aufsetzen eines hohlzylindrischen Schraubendreherkopfes auf einen Schraubenkopf dienen.

Ausführungsbeispiele der Erfindung werden nachstehend anhand der Zeichnung näher erläutert. Es zeigen

Fig. 1      in einer schematischen, teilweise geschnittenen Darstellung eine Einsteckeinrichtung mit einer halbkugel- oder kalottenförmigen Führungsspitze einer ersten Welle in eine hohlzylindrische Aufnahme einer zweiten Welle,

Fig. 1a      eine kegelstumpfförmige Führungsspitze,

Fig. 2      eine Schnittdarstellung gem. Linie II-II in Fig. 1,

Fig. 3      in einer schematischen, teilweise geschnittenen Darstellung eine weitere Ausführungsform einer Einsteckeinrichtung,

Fig. 4      in einer schematischen, teilweise geschnittenen Darstellung eine weitere Ausführungsform einer Einsteckeinrichtung,

Fig. 4a      eine kegelstumpfförmige Führungsspitze,

Fig. 5 + 6      in rein schematischen Darstellungen die Geometrien einer Führungsspitze,

Fig. 7      in einer schematischen, teilweise geschnittenen Darstellung eine weitere Ausführungsform einer Einsteckeinrichtung zum Aufsetzen eines Schraubendreherschlüssels auf einen Schraubenkopf, und

Fig. 7a      eine kugelstumpfförmige Führungsspitze.

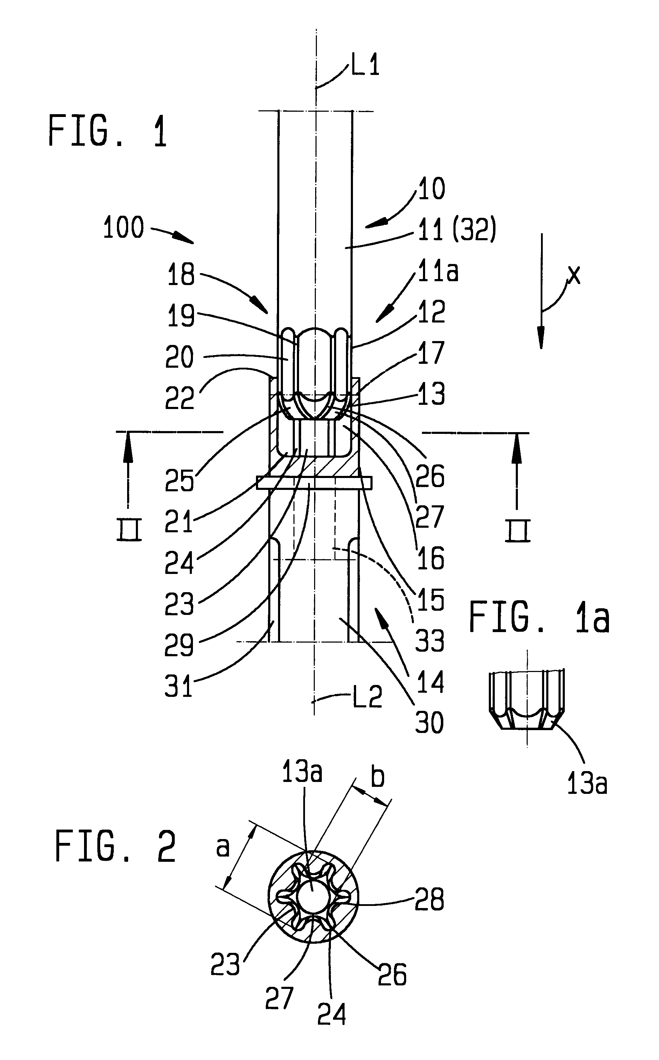

In Fig. 1 ist mit 100 eine Einsteckeinrichtung für eine erste Welle 10 bezeichnet. Dabei weist der Schaft 11 der Welle 10 an seinem Ende 11a einen Einsteckabschnitt 12 auf, der mit einer Führungsspitze 13 versehen ist, die in das hohlzylinderische Kopfstück 15 einer zweiten Welle 14 einsteckbar ist, wozu das hohlzylindrische Kopfstück 15 eine Aufnahmeöffnung 16 aufweist. Die Welle 10 mit dem Einsteckabschnitt 12 bildet dabei das erste Treib-Element, während die Welle 14 mit dem hohlzylindrischen Kopfstück 15 das zweite Treib-Element bzw. das zylindrische Hohl-Treib-Element bildet. Sowohl der Einsteckabschnitt 12 als auch der Innenraum der Aufnahmeöffnung 16 entsprechen der TORX-Geometrie (Fig. 5 und 6), wobei beide Treib-Elemente 10, 14 in der Äquatorebene 17 mit der TORX-Geometrie korrespondieren. Der Einsteckabschnitt 12 weist dabei auf seiner Außenfläche 18 sechs gleichmäßig um die Längsachse L1 verteilte Erhöhungen 19 auf, zwischen denen in gleicher Weise regelmäßig angeordnet sechs Vertiefungen 20 liegen. Im Vergleich zu einer kreisförmigen Umfangslinie wird somit ein wellenförmiges Außenprofil gebildet.

Das hohlzylindrische Kopfstück 15 ist in Fig. 1 entsprechend senkrecht geschnitten dargestellt, während Fig. 2 eine Aufsicht entsprechend Linie II-II darstellt. Es weist an seiner Innenoberfläche 21 sechs entsprechend angeordnete Erhöhungen 23 auf, zwischen denen sechs Vertiefungen 24 liegen, so daß sich ebenfalls dem Vergleich zu einer kreisförmigen Umfangslinie ein wellenförmiges Profil ergibt, das sich vom oberen Rand 22 parallel zur Längsachse L2 nach innen erstreckt. Dabei weisen die gegenüberliegenden Teile der Vertiefungen 24 einen Abstand a und die gegenüberliegenden Stellen der Erhöhungen 23 einen kleineren Abstand b auf (Fig. 2).

Der Einsteckabschnitt 12 an der ersten Welle 10 trägt demgegenüber schmälere Erhöhungen 19, zwischen denen breitere Vertiefungen 20 liegen. Wie in Fig. 2 dargestellt ist, berühren sich in der Äquatorebene 17 der Einsteckabschnitt 12 und die Innenausgestaltung des hohlzylindrischen Kopfstückes 15, da im Äquatorbereich 17, der dem untenseitigen Ende des Einsteckabschnittes 12 entspricht, die Erhöhungen 19 und die Vertiefungen 20 einen zu den Erhöhungen 23 und den Vertiefungen 24 der Innenoberfläche 21 des hohlzylindrischen Kopfstückes 15 etwa komplementären Verlauf aufweisen.

An den Einsteckabschnitt 12 schließt sich dann die Führungsspitze 13 an, auf deren Außenoberfläche 25 zur Spitze hin schmaler werdende Erhöhungen 26 liegen, zwischen denen sich breitere bzw. gleich breite Vertiefungen 27 erstrecken. Wie in Fig. 2 dargestellt ist, ist die obere Polkappe zur Spitze 13a (Fig. 5) der Führungsspitze 13 abgeschnitten, so daß in Fig. 2 eine Kreislinie 28 sichtbar wird, zu der hin die Erhöhungen 26 und Vertiefungen 27 auslaufen.

Bei dieser Ausführungsform, wie auch bei der Ausführungsform gemäß Fig. 1 gehen die Erhöhungen 19 und die Vertiefungen 20 des Einsteckabschnittes 12 und die Erhöhungen 26 und die Vertiefungen 27 der Führungsspitze 13 jeweils stetig ineinander über, wie dies auch in der Zeichnung dargestellt ist.

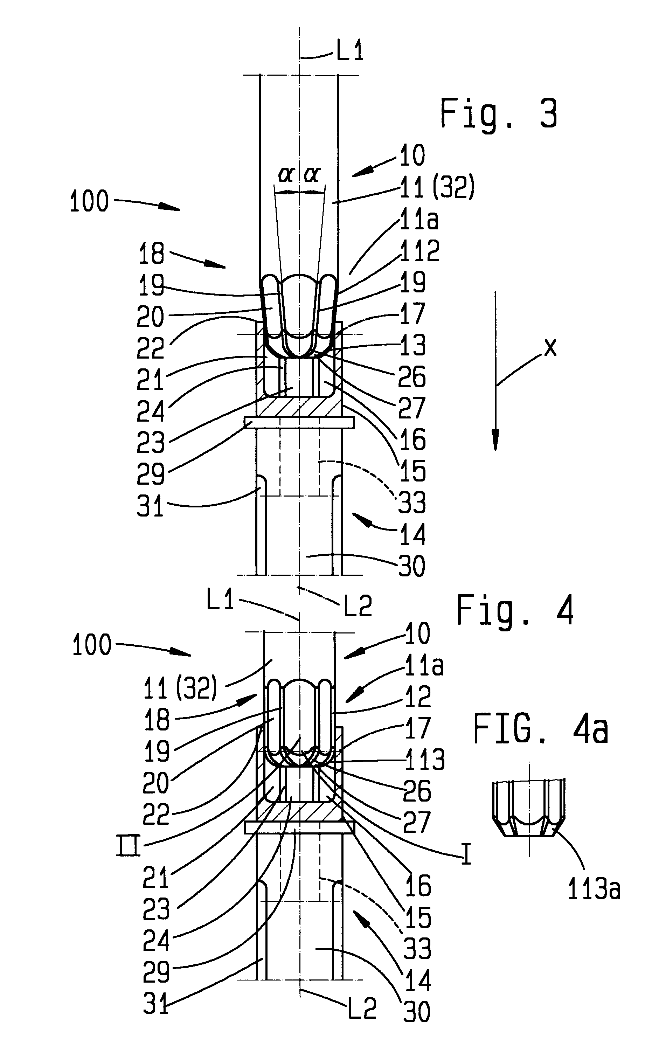

Bei der in Fig. 4 dargestellten weiteren Ausführungsform entsprechen wiederum alle wesentlichen Teile der Ausführungsform gemäß Fig. 1, so daß hierauf Bezug genommen wird. Die Führungsspitze 113 weist jedoch eine etwas andere Ausgestaltung auf, da hier vorgesehen ist, daß der Mittelpunkt II des Innenkreises bzw. des Innen- und Außenkreises, wobei der Innenkreis mit dem Minimum der konkaven Vertiefungen 27 tangiert und der Außenkreis mit dem Maximum der konvexen Erhöhungen 26 tangiert, mit dem Mittelpunkt I des Außenkreises der Führungsspitze 113 um einen Betrag gegenüber dem Mittelpunkt I oberhalb des Äquators 17 in den Einsteckabschnitt 12 entlang der Längsachse L1 gestellt ist. Hierdurch ergibt sich die Möglichkeit, die Welle 10 bzw. den Schraubendreherschaft 32 auch stark angestellt, d. h. bei einem großen Winkel der Längsachsen L1 und L2 zueinander einzuführen, wobei sich dann eine automatische Ausrichtung noch leichter ergibt. Auch bei dieser Ausführungsform kann die Führungsspitze 113a als Kegelstumpf ausgebildet sein, wie dies in Fig. 4a angedeutet ist.

Die entsprechenden geometrischen Verhältnisse sind dabei in Fig. 5 und 6 dargestellt. Hierdurch kommt bei niedrigem hohlzylindrischen Kopfstück 15 der zylindrische Torxantrieb voll zur Anlage und ein hohes Drehmoment bleibt übertragbar. Die Führungsspitze 13, 113 wird kurz.

Im Ausführungsbeispiel gemäß Fig. 1 und 2 ist die Welle 10 mit dem Einsteckabschnitt 12 frei in das hohlzylindrische Kopfstück 15 der Welle 14 eingesteckt. Wenn dann beide Wellen 10, 14 gegen eine axiale Verschiebung gesichert werden, kann mittels der so dargestellten Verbindung ein Drehmoment übertragen werden. Dabei kann die zweite Welle 14 als Schraube ausgebildet sein, wobei dann das hohlzylindrische Kopfstück 15 auf einem Schraubenkopf 29 angeordnet ist, dem sich beispielsweise ein Schraubenschaft 30 mit einem Gewinde 31 anschließt. Der Schaft 11 der Welle 10 ist dann als Schraubendreherschaft 32 anzusehen.

Die Führungsspitze 13a kann auch kegelstumpfförmig ausgebildet sein, wie dies in Fig. 1a angedeutet ist. Hierbei ergeben sich die gleichen vorteilhaften Eigenschaften, jedoch kann vorteilhafterweise eine einfachere Herstellungstechnik Anwendung finden.

Bei der in Fig. 3 dargestellten weiteren Ausführungsform entsprechen alle wesentlichen Teile der voranstehend erläuterten Ausführungform, so daß hierauf Bezug genommen wird. Der Einsteckabschnitt 112 weist hierbei jedoch eine etwas abweichende Gestaltung auf, da die Erhöhungen 19 und die Vertiefungen 20 gegenüber der Längsachse L1 unter einen Winkel Alpha von $1°$-$6°$, insbesondere $2,5°$-$3,5°$ gestellt sind, so daß beide, ausgehend von der Führungsspitze 13 größerwerdende Kreis-Maße aufweisen. Beim Einstecken der Welle 10 in X-Richtung in das hohlzylindrische Kopfstück 15 wird dabei eine axiale Klemmung erreicht, so daß die zweite Welle 14, die ja beispielsweise eine Schraube sein kann, klemmend an der Welle 10 gehalten wird.

Wie in Fig. 7 angedeutet ist, ist es auch möglich, die Einsteckeinrichtung umgekehrt, d. h. als Führungsspitze 113 auf einem Einsteckabschnitt 12 auf einem Schraubenkopf 29 anzuordnen, wobei dann das hohlzylindrische Kopfstück 15 einem Schraubendreherschaft 132 zuzuordnen ist. Auch bei dieser Ausführungsform ergibt sich der Vorteil, daß der Schraubendreherschaft 132 mit einer Längsachse L1 nicht fluchtend mit der Längsachse L2 des Schraubenschaftes 30 aufgesetzt werden muß, sondern daß auch bei einem schrägen Aufsetzen ein optimales Zusammenführen möglich ist. Weiterhin ist gewährleistet, daß auch bei einem Aufsetzen so, daß die Erhöhungen 23 auf die Erhöhungen 26 auftreffen, durch die gewählte Geometrie eine automatische Verdrehung des Schraubendreherschaftes 132 auftritt, die zu einem gleitenden Ineinanderrutschen führt. Es wird somit eine noch sicherere Kupplung zwischen den beiden Wellen 10 und 14 erreicht, so daß unabhängig davon, wie die Drehwinkelstellung der Wellen zueinander ist und auch unabhängig davon, welche Welle als Antrieb dient und welche Welle den Antrieb darstellt, eine formschlüssige Verbindung zwischen den profilierten Oberflächen ganz leicht hergestellt werden kann, wobei die spezielle Profilgestaltung die Belastung der Werkstoffe stark vermindert, so daß eine Belastung durch Scherkräfte und Risse durch Kerbspannungen, wie sie beispielsweise auch bei normalen Sechskantschlüsselanordnungen auftreten kann, sicher vermieden wird. Auch bei dieser Ausgestaltung kann die in Fig. 7a angedeutete kegelstumpfförmige Ausgestaltung der Führungsspitze Anwendung finden. Der Bogenlinien-Verlauf der Erhöhungen 19, sei es auf dem echten Einsteckabschnitt 12 bzw. 112 oder sei es an der Einführspitze 13 bzw. 113 bzw. an beiden Bereichen, kann das Einführen erleichtern und einen gewissen Hintergriff-Formsitz herbeiführen, sei es bei einschraubendem Drehsinn oder ausschraubendem Drehsinn, je nachdem wie der Bogenverlauf in Umfangsrichtung auslädt bzw. in welche Richtung die Bogenlinie im Bereich der Einführspitze ausläuft.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

**Patentansprüche**

1. Schraubendreher mit einem Schaft (11), an dessen einem Ende (11a) ein Einsteckabschnitt (12) vorgesehen ist mit auf der Außenfläche (18) verlaufenden, gleichmäßig am Umfang verteilten, ineinander übergehenden Erhöhungen (19) und Vertiefungen (20) zum Einstecken in eine Aufnahmeöffnung (16) einer Schraube (14), dadurch gekennzeichnet, daß der Einsteckabschnitt (12) mit einer kalotten- oder kegelstumpfförmigen Führungsspitze (13, 113) versehen ist, die auf der Außenfläche (25) verlaufende, gleichmäßig am Umfang verteilte, ineinander übergehende Erhöhungen (26) und Vertiefungen (27) aufweist.

2. Schraubendreher nach Anspruch 1, dadurch gekennzeichnet, daß bei der Führungsspitze (13, 113)
   a) die Übergänge zwischen den Erhöhungen (26) und den Vertiefungen (27) stetig verlaufen, und
   b) die Erhöhungen (19) und die Vertiefungen (20) des Einsteckabschnittes (12) und die Erhöhungen (26) und die Vertiefungen (27) der Führungsspitze (13, 113) bis zur Äquatorzone oder lobularen Stange (17) in ihrer Breite gleichbleiben und daß die Erhöhungen (26) auf der Führungsspitze (13, 113) mit zunehmender Entfernung von der Äquatorzone (17) oder lobularen Stange zur Spitze (Pol) (13a) schmäler werden.

3. Schraubendreher nach Anspruch 1 oder 2, dadurch gekennzeichnet, daß der Mittelpunkt (II) des Innenkreises, der mit dem Minimum der konkaven Vertiefungen (27) tangiert, mit dem Mittelpunkt (I) des Außenkreises der Führungsspitze (13, 113) gleich ist oder um einen bestimmten Betrag gegenüber dem Mittelpunkt (I) oberhalb des Äquators (17) in den Einsteckabschnitt (12) gestellt ist oder die Mittelpunkte der Innen- und Außenkreise gemeinsam um einen bestimmten Betrag gegenüber dem Mittelpunkt (I) oberhalb des Äquators (17) in den Mittelpunkt (II) gestellt sind.

4. Schraubendreher nach einem der Ansprüche 1 bis 3, dadurch gekennzeichnet, daß die Erhöhungen (19) und die Vertiefungen (20) auf der Außenfläche (18) des Einsteckabschnittes (12) unter einem Winkel (Alpha) zur Längsachse (L1) des Schaftes verlaufen oder nur die Erhöhungen (19) unter einem Winkel (Alpha) zur Längsachse (L1) des Schaftes verlaufen.

5. Schraubendreher nach Anspruch 4, dadurch gekennzeichnet, daß der Winkel (Alpha) 1°-6° beträgt.

6. Schraubendreher mit zugehöriger Schraube, dadurch gekennzeichnet, daß die Vertiefungen (20) der Schraube ohne einen Winkel zur Längsachse (L1) verlaufen.

7. Schraubendreher nach einem der Ansprüche 1 bis 5, dadurch gekennzeichnet, daß die Erhöhungen (19) in einer leicht geschweiften, in Umfangsrichtung ausladenden Bogenlinie verlaufen.

8. Schraubendreher nach einem der Ansprüche 1 bis 7, dadurch gekennzeichnet, daß die Erhöhungen (19) im Bereich der Einführspitze in einer in Umfangsrichtung weisenden Bogenlinie auslaufen.

FIG. 1

FIG. 1a

FIG. 2

Fig. 3

Fig. 4

FIG. 4a

Fig. 5

A

B

K2

II

I

15

B

K1

A

13, 113

13a

Fig. 6

Fig. 7

132

15

113

12

29

30

31

113a

Fig. 7a